# EUROPÄISCHE PATENTANMELDUNG

(11) **EP 1 470 962 A1**
(43) Veröffentlichungstag der Anmeldung: **27.10.2004**
(21) Anmeldenummer: 04009827.9
(22) Anmeldetag: 26.04.2004
(51) Int. Cl.: B60R 16/00, B60R 16/02, B60R 25/02

(54) **Lenksäulenschloss**

(30) Priorität: 24.04.2003 DE 10319581
(71) Anmelder: Valeo Schalter und Sensoren GmbH, 74321 Bietigheim-Bissingen (DE)
(72) Erfinder: Bosch, Jürgen, 86609 Donauwörth (DE); Preinfalk, Hans, 74357 Bönnigheim (DE); Gross, Michael, 74226 Nordheim (DE); Schlentrich, Jörg, 85229 Markt Indersdorf (DE); Lieb, Kurt, 63500 Seligenstadt (DE)
(74) Vertreter: Bulling, Alexander, Dr.

(57) **Zusammenfassung**

Die Erfindung betrifft ein Lenksäulenschloss zur Anordnung an die Lenksäule eines Fahrzeugs, insbesondere eines Kraftfahrzeugs, mit einem ein oder mehrteiligen Gehäuse (12) zur Aufnahme eines elektrisch betätigbaren Verriegelungsmechanismus, wobei an dem Gehäuse (12) eine Lenkstockfunktionseinheit (18) angeordnet ist. Zur Veringerung des Montageaufwands und der Zahl der Bauteile erfolgen elektrische Ansteuerung, Versorgung und Betätigung des Verriegelungsmechanismus über die Lenkstockfunktionseinheit (18).

## Beschreibung

Die Erfindung betrifft ein Lenksäulenschloss zur Anordnung an die Lenksäule eines Fahrzeuges, insbesondere eines Kraftfahrzeuges, mit einem ein- oder mehrteiligen Gehäuse zur Aufnahme eines elektrisch betätigbaren Verriegelungsmechanismus. Lenksäulenschlösser dienen als Diebstahlschutz und verriegeln im verschlossenen Zustand die Lenksäule mechanisch. Dadurch wird ein Verdrehen der Lenksäule über das Lenkrad verhindert.

Lenkradschlösser mit elektrisch betätigbaren Verriegelungsmechanismen finden insbesondere bei Fahrzeugen Verwendung, die nicht mittels eines herkömmlichen Schlüssels, sondern beispielsweise mittels Näherungssensoren oder mittels Druck-, Schiebe- oder Drehbetätiger gestartet werden. Bei derartigen Fahrzeugen befindet sich das Lenksäulenschloss in der Regel im Fußraum des Fahrzeuglenkers. Für die Ansteuerung und elektrische Betätigung des Verriegelungsmechanismus ist eine entsprechende Verkabelung erforderlich.

Aus der DE 199 27 542 A1 ist ein Lenkstockschaltermodul mit einer elektrisch betätigbaren Verriegelungseinheit bekannt geworden. Das Lenkstockschaltermodul sieht einen Modulabschnitt mit einer Lenksäulenverriegelung vor, die jeweils getrennt voneinander elektrisch versorgt und angesteuert werden.

Der vorliegenden Erfindung liegt die Aufgabe zugrunde, ein Lenksäulenschloss bereitzustellen, das zum einen einen effektiven Diebstahlschutz bereitstellt und zum anderen mit möglichst wenig Montageaufwand, möglichst wenig Bauteilen und einer vereinfachten Ansteuerung und Stromversorgung auskommt.

Diese Aufgabe wird bei einem Lenksäulenschloss mit den Merkmalen des Anspruchs 1 gelöst. Lenkstockfunktionseinheiten sind im Bereich des Lenkstocks, in der Regel im Bereich unterhalb des Lenkrades, angeordnet. Sie können beispielsweise als Lenkstockschaltermodul ausgebildet sein, das zur Aufnahme von Lenkstockschaltern, Drehwinkelsensoren, Signalübertragungseinrichtungen und dergleichen dient.

Die Erfindung hat den Vorteil, dass das Lenksäulenschloss zusammen mit der Lenkstockfunktionseinheit vormontiert werden kann und dann in einem Arbeitsschritt in das Fahrzeug eingebaut werden kann. Außerdem können zusätzliche Befestigungspunkte an der Fahrzeugkarosserie zur Anordnung des Lenksäulenschlosses beziehungsweise der Lenkstockfunktionseinheit entfallen. Dabei ist denkbar, dass entweder das Lenksäulenschloss oder die Lenkstockfunktionseinheit karosserieseitig befestigt wird.

Erfindungsgemäß erfolgt die elektrische Ansteuerung, Versorgung und Betätigung des Verriegelungsmechanismus über die Lenkstockfunktionseinheit erfolgt. Die Lenkstockfunktionseinheit dient dann als zentraler Steuerknoten im Bereich des Lenkstocks und ist nicht nur für die Funktionen der Lenkstockfunktionseinheit verantwortlich, sondern auch für den elektrischen Verriegelungsmechanismus. Dies hat den Vorteil, dass zum einen Verkabelungsaufwand in erheblichem Umfang reduziert wird. Zum anderen entfallen auch elektische und elektronische Bauteile, die sonst zur Versorgung und Ansteuerung des Verriegelungsmechanismus erforderlich wären und nun von der Lenkstockfunktionseinheit zur Verfügung gestellt werden können.

Eine vorteilhafte Ausführungsform der Erfindung ergibt sich dann, wenn das Gehäuse eine Bodenplatte aufweist, die mit einer Gehäusewandung der Lenkstockfunktionseinheit verbindbar ist. Die Verbindung kann beispielsweise eine Schnapp-, Schraub-, Niet-, Klemm-, Verstemmverbindung oder dergleichen sein.

Ferner ist vorteilhaft, wenn das Gehäuse des Lenksäulenschlosses einen Zündanlassschalter manipuliersicher aufnimmt. Beim bekannten Stand der Technik ist der Zündanlassschalter als separater Schalter in einem eigenen Gehäuse ausgebildet. Dadurch, dass der Zündanlassschalter erfindungsgemäß von dem in der Regel sehr solide ausgebildeten Gehäuse des Lenksäulenschlosses manipuliersicher aufgenommen wird, wird der Diebstahlschutz erhöht.

Dabei ist denkbar, dass das Lenksäulenschloss einen Gehäuseabschnitt zur Aufnahme des Zündanlassschalters umfasst. Hierdurch wird gewährleistet, dass der vergleichsweise empfindliche Zündanlassschalter nicht durch die Mechanik des Verriegelungsmechanismus negativ beeinträchtigt wird.

Erfindungsgemäß ist außerdem vorteilhaft, wenn das Lenksäulenschloss einen Gehäuseabschnitt zur Aufnahme eines Betätigungsmittels für den Verriegelungsmechanismus und/oder den Zündanlassschalter umfasst. Hierdurch kann erreicht werden, dass auch das Betätigungsmittel manipuliersicher von dem Gehäuse des Lenksäulenschlosses aufgenommen wird.

Als Betätigungsmittel kommen insbesondere Schließzylinder für Schlüssel, Näherungssensoren, Druck-, Schiebe- oder Drehbetätiger in Betracht.

Das Lenksäulenschloss und die Lenkstockfunktionseinheit können erfindungsgemäß so ausgebildet sein, dass sie ein gemeinsames, ein- oder mehrteiliges Gehäuse aufweisen. Dadurch können Gehäusebauteile eingespart werden. Außerdem verringern sich die Toleranzketten.

Vorteilhafterweise sind mehrere, von einander separat ausgebildete Gehäuseteile vorgesehen. Dies hat den Vorteil, dass einzelne Komponenten des Lenksäulenschlosses als eigene Baugruppen vormontiert werden können. Bei der Endmontage werden die einzelnen Gehäuseteile, die die verschiedenen Baugruppen aufnehmen, miteinander gefügt.

Dabei ist denkbar, dass die Gehäuseteile aus verschiedenen Werkstoffen ausgebildet sind. Beispielsweise sind die Gehäuseteile für den Verschließmechanismus aus metallischen Werkstoffen, insbesondere Aluminiumdruckguss oder Zinkdruckguss. Die Gehäuseteile für die Funktionseinheit können beispielsweise Kunststoff sein.

Weitere vorteilhafte Ausgestaltungen und Einzelheiten der Erfindung sind der folgenden Beschreibung zu entnehmen, in der die Erfindung anhand der in der Zeichnung dargestellten Ausführungsform näher beschrieben und erläutert ist.

Es zeigen:

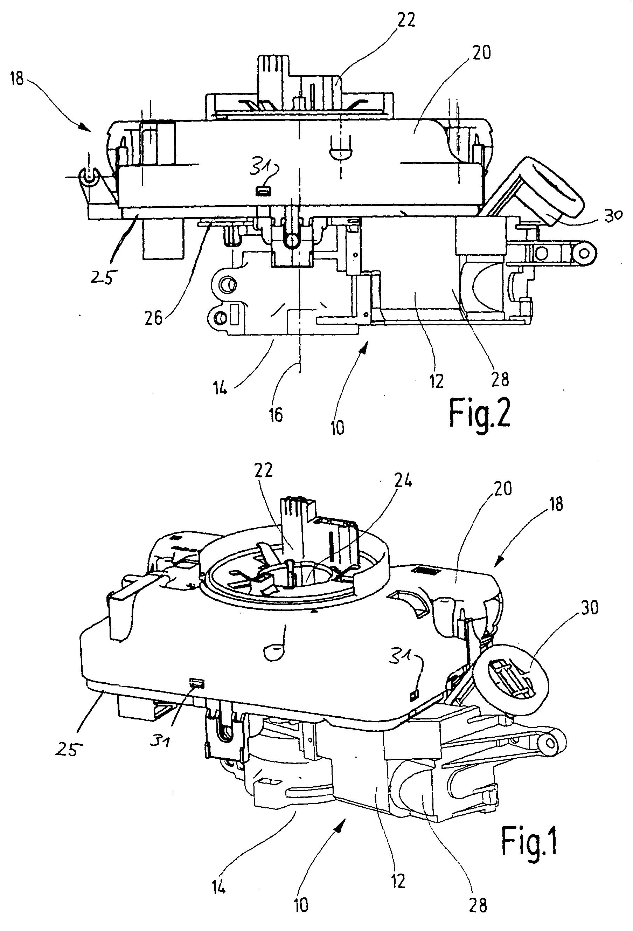

- Figur 1: ein erfindungsgemäßes Lenksäulenschloss in perspektivischer Ansicht von schräg oben; und
- Figur 2: das Lenksäulenschloss gemäß Figur 1 in Seitenansicht.

Das in den Figuren dargestellte Lenksäulenschloss 10 ist zur Anordnung an eine nicht dargestellte Lenksäule eines Kraftfahrzeuges vorgesehen. Das Lenksäulenschloss 10 weist ein Gehäuse 12 auf, mit einem zylinderartigen Durchbruch 14 entlang der Achse 16, durch den sich im montierten Zustand die Lenksäule erstreckt. Das Gehäuse 12 nimmt einen nicht näher dargestellten und nicht näher erläuterten elektrisch betätigbaren Verriegelungsmechanismus auf, mit dem die Lenksäule in einer bestimmten Position gegenüber dem Gehäuse 12, und damit gegenüber der Fahrzeugkarosserie, verriegelt werden kann.

Das Lenksäulenschloss 10 ist in den Figuren an einer Lenkstockfunktionseinheit in Form eines Lenkstockschaltermoduls 18 angeordnet. Das Lenkstockschaltermodul 18 umfasst seinerseits ein Gehäuse 20, das insbesondere über das Gehäuse 12 des Lenksäulenschlosses 10 karosserieseitig befestigt wird. Außerdem umfasst das Lenkstockschaltermodul 18 einen gegenüber dem Gehäuse 20 drehbar angeordneten Rotor 22, der mit dem nicht dargestellten Lenkrad des Fahrzeugs koppelbar ist. Entsprechend dem Lenksäulenschloss 20 weist das Lenkstockschaltermodul 18 ein entlang der Achse 16 verlaufenden Durchbruch 24 auf, durch den sich im montierten Zustand die Lenksäule des Fahrzeugs erstreckt.

Bei dem dargestellten Lenksäulenschloss 10 erfolgt die elektrische Ansteuerung, Versorgung und Betätigung des Verriegelungsmechanismus über das Lenkstockschaltermodul 18. Für das Lenksäulenschloss 10 ist folglich kein eigener Steckeranschluss oder Verkabelungsaufwand erforderlich.

Zur Anbindung des Lenksäulenschlosses 10 weist das Gehäuse 12 eine mit dem Gehäuse 12 einstückig verbundene, insbesondere an das Gehäuse 12 angeformte Bodenplatte 26 auf, die mit der ihr zugewandten Seite 25 des Gehäuses 20 des Lenkstockschaltermoduls 18 verbunden ist. Die Verbindung kann insbesondere durch Verschrauben, Verklipsen oder dergleichen erfolgen. Die Seite 25 verschließt die im demontierten Zustand offene Seite des schalenförmig ausgebildeten Gehäuses 20 des Lenkstockschaltermoduls 18, wobei die Seite 25 ihrerseits insbesondere durch Verrastungen 31 am Gehäuse 20 angeordnet ist.

Dabei kann das Gehäuse 12 samt der Seite 25 aus einem anderen Werkstoff sein, als die Bodenplatte 26 oder das Gehäuse 20 des Lenkstockschaltermoduls 18. Das Gehäuse 12 samt Bodenplatte 26 können insbesondere aus einem metallischen Werkstoff sein. Die Seite 25 und das Gehäuse 20 der Funktionseinheit 18 können insbesondere aus einem Kunststoff sein.

Da die Bodenplatte 26 samt der Seite 25 im montierten Zustand die offene Seite des Gehäuses 20 des Lenkstockschaltermoduls 18 abdeckt, bilden die beiden Gehäuse 12 und 20 samt der Seite 25 und der Bodenplatte 26 ein gemeinsames Gehäuse für das Lenksäulenschloss 10 und das Lenkstockschaltermodul 18, die ihrerseits eine zusammengehörige Einheit bilden. Diese Einheit kann vor dem Einbau in das Fahrzeug vormoniert werden. Vor der Vormontage des Lenksäulenschlosses 10 mit dem Lenkstockschaltermodul 18 können sowohl das Lenksäulenschloss 10 als auch das Lenkstockschaltermodul 18 jeweils als eigene Baugruppe vormontiert werden. Hierdurch ergibt sich ein einfacherer und betriebssicherer Montageablauf.

Das Gehäuse 12 des Lenksäulenschlosses 10 nimmt eine nicht dargestellten Zündanlassschalter manipuliersicher auf. Hierfür ist ein Gehäuseabschnitt 28 vorgesehen, der als vom restlichen Gehäuse 12 separat ausgebildeter Gehäuseabschnitt ausgebildet sein kann.

Außerdem sieht das Gehäuse 12 des Lenkradschlosses 10 einen Gehäuseabschnitt 30 zur Aufnahme eines Betätigungsmittels des Zündanlassschalters auf. Als Betätigungsmittel kann beispielsweise ein über einen Schlüssel betätigbarer Schließzylinder, ein Näherungssensor, ein Druck-, Schiebeoder Drehbetätiger in Betracht kommen.

Da die Bodenplatte 26 im montierten Zustand das Gehäuse 20 des Lenkstockschaltermoduls 18 abdeckt, bilden die beiden Gehäuse 12 und 20 ein gemeinsames Gehäuse für das Lenksäulenschloss 10 und das Lenkstockschaltermodul 18. Das Lenksäulenschloss 10 und das Lenkstockschaltermodul 18 bilden folglich eine zusammengehörige Einheit, die vor dem Einbau in das Fahrzeug vormoniert werden kann. Vor der Vormontage des Lenksäulenschlosses 10 mit dem Lenkstockschaltermodul 18 können sowohl das Lenksäulenschloss 10 als auch das Lenkstockschaltermodul 18 jeweils als eigene Baugruppe vormontiert werden.

Sämtliche in der Beschreibung, den nachfolgenden Ansprüchen und in der Zeichnung dargestellten Merkmale können sowohl einzeln als auch in beliebiger Kombination miteinander erfindungswesentlich sein.

Das Gehäuse 12 samt Bodenplatte 26 können aus einem metallischen Werkstoff sein. Die Seite 25 und das gehäsue 20 der Funktionseinheit 18 können insbesondere aus einem Kunststoff sein.

## Patentansprüche

1. Lenksäulenschloss (10) zur Anordnung an die Lenksäule eines Fahrzeugs, insbesondere eines Kraftfahrzeugs, mit einem ein oder mehrteiligen Gehäuse (12) zur Aufnahme eines elektrisch betätigbaren Verriegelungsmechanismus, wobei an dem Gehäuse (12) des Lenksäulenschlosses (10) eine Lenkstockfunktionseinheit (18) angeordnet ist, **dadurch gekennzeichnet, dass** die elektrische Ansteuerung, Versorgung und Betätigung des Verrieglungsmechanismus über die Lenkstockfunktionseinheit (18) erfolgt.

2. Lenksäulenschloss (10) nach Anspruch 1, **dadurch gekennzeichnet, dass** das Gehäuse (12) eine Bodenplatte (26) umfasst, die mit einer Seite (25) der Lenkstockfunktionseinheit (18) verbindbar ist.

3. Lenksäulenschloss (10) nach Anspruch 2, **dadurch gekennzeichnet, dass** die Bodenplatte (26) und/oder die Seite (25) der Lenkstockfunktionseinheit (18) im montierten Zustand eine offene Seite des Gehäuses (20) des Lenkstockschaltermoduls (18) verschließt.

4. Lenksäulenschloss (10) nach einem der vorhergehenden Ansprüche, **dadurch gekennzeichnet, dass** Lenksäulenschloss (10) mittels Halterungsabschnitten lenksäulen- und/oder karosserieseitig befestigbar ist, wobei die Funktionseinheit über das Lenksäulenschloss (10) befestigt ist.

5. Lenksäulenschloss (10) nach einem der vorhergehenden Ansprüche, **dadurch gekennzeichnet, dass** das Gehäuse (12) des Lenksäulenschlosses (10) einen Zündanlassschalter manipuliersicher aufnimmt.

6. Lenksäulenschloss (10) nach Anspruch 5, **dadurch gekennzeichnet, dass** das Lenksäulenschloss (10) einen Gehäuseabschnitt (28) zur Aufnahme des Zündanlassschalters (10) umfasst.

7. Lenksäulenschloss (10) nach einem der vorhergehenden Ansprüche, **dadurch gekennzeichnet, dass** das Lenksäulenschloss (10) einen Gehäuseabschnitt (30) zur Aufnahme eines Betätigungsmittels für den Zündanlassschalter und/oder den Verriegelungsmechanismus umfasst.

8. Lenksäulenschloss (10) nach einem der vorhergehenden Ansprüche, **dadurch gekennzeichnet, dass** das Betätigungsmittel für den Zündanlassschalter und/oder den Verriegelungsmechanismus als Schließzylinder, Näherungssensors, Druck-, Schiebe- oder Drehbetätiger oder dergleichen betätigbar ist.

9. Lenksäulenschloss (10) nach einem der vorhergehenden Ansprüche, **dadurch gekennzeichnet, dass** das Lenksäulenschloss und die Lenkstockfunktionseinheit als zusammen vormontierbare Einheit ausgebildet sind und ein gemeinsames, ein- oder mehrteiliges Gehäuse (10, 12, 20, 25, 26, 28) aufweisen.

10. Lenksäulenschloss (10) nach einem der vorhergehenden Ansprüche, **dadurch gekennzeichnet, dass** das Gehäuse (10, 12) mehrere, voneinander separate ausgebildete Gehäuseteile umfasst.

11. Lenksäulenschloss (10) nach Anspruch 10, **dadurch gekennzeichnet, dass** das die Gehäuseteile (10, 12) aus verschiedenartigen oder gleichartigen Werkstoffen sind.

12. Lenksäulenschloss (10) nach einem der vorhergehenden Ansprüche, **dadurch gekennzeichnet, dass** die Lenkstockfunktionseinheit (18) ein Lenkstockschaltermodul ist.
